# EUROPÄISCHE PATENTSCHRIFT

(11) **EP 2 686 272 B1**
(45) Veröffentlichungstag und Bekanntmachung des Hinweises auf die Patenterteilung: **01.08.2018**
(21) Anmeldenummer: 12716225.3
(22) Anmeldetag: 16.03.2012
(51) Int. Cl.: C01B 32/60, B01D 9/00, B01J 19/18, C01B 32/225, C01F 11/18

(54) **VERFAHREN ZUR KONTINUIERLICHEN HERSTELLUNG VON GEFÄLLTEM CALCIUMCARBONAT**
METHOD FOR THE CONTINUOUS PRODUCTION OF PRECIPITATED CALCIUM CARBONATE
PROCÉDÉ POUR PRODUIRE EN CONTINU DU CARBONATE DE CALCIUM PRÉCIPITÉ

(30) Priorität: 18.03.2011 DE 102011014348
(43) Veröffentlichungstag der Anmeldung: 22.01.2014
(73) Patentinhaber: Fels-Werke GmbH, 38640 Goslar (DE)
(72) Erfinder: STUMPF, Thomas, 38667 Bad Harzburg (DE); BOENKENDORF, Ulf, 31188 Holle (DE); BAUMANN, Leonhard, 94501 Aldersbach (DE); MÖLLER, Roland, 38667 Bad Harzburg (DE)
(74) Vertreter: Patentanwälte Olbricht Buchhold Keulertz
(86) Internationale Anmeldenummer: PCT/EP2012/001172
(87) Internationale Veröffentlichungsnummer: WO 2012/126594

(56) Entgegenhaltungen:
- WO-A1-01/17905
- DE-A1- 19 643 657
- GB-A- 907 156
- US-A- 2 964 382

## Beschreibung

Die vorliegende Erfindung befasst sich mit einem Verfahren zur kontinuierlichen Herstellung von gefälltem Calciumcarbonat durch temperaturgeregelte Reaktion einer Suspension im Wesentlichen bestehend aus Calciumhydroxid und Wasser mit kohlendioxidhaltigen Gasen mit den Merkmalen des Oberbegriffes des Anspruches 1.

Die industrielle Herstellung von Calciumcarbonat erfolgt durch Mahlung von natürlichem Kalkstein oder bevorzugt durch chemische Reaktion einer wässrigen Calciumhydroxid-Suspension (Kalkmilch) mit Kohlendioxid-haltigen Gasen.

Die Morphologie des natürlichen Calciumcarbonats ist unregelmäßig und die Partikelgrößenverteilung liegt im Bereich von unter einem bis ca. einhundert fünfzig Mikrometer. Da anspruchsvolle Anwendungen die gezielte Herstellung von Calciumcarbonat in bestimmten und vor allem einheitlichen Morphologien erfordern, hat gemahlenes Calciumcarbonat in der Vergangenheit zunehmend an Bedeutung verloren.

Die Synthetische Herstellung von Calciumcarbonat durch Reaktion von Kalkmilch mit Kohlendioxid-haltigen Gasen erlaubt eine gezielte Erzeugung von unterschiedlichen Morphologien und engeren Korngrößenverteilungen. Je nach Wahl der Verfahrensweise können dabei Calciumcarbonat-Kristalle als Rhomboeder, Skalenoeder, Nadeln, Stäbchen, säulenförmige oder sphärische Partikel ausgefällt werden. Beispiele für derartige Calciumcarbonate sind in der DE-PS 29 13 613 beschrieben.

Bekannt aus der EP 0 429 707 B1 ist auch die Herstellung von stabilem basischem Calciumcarbonat in Plättchenform.

Entscheidend für das Arbeitsergebnis sind die gezielten Einstellungen der Herstellungsbedingungen, z.B. Konzentration der Calciumhydroxid-Suspension, Temperatur, Art und Weise der Reaktion, Anwesenheit von Additiven etc.

Calciumcarbonat findet in einer Vielzahl industrieller Prozesse Anwendung. Beispielsweise bei der Herstellung von Papier, Dispersionsfarben, und Kosmetika, wobei es zumeist als Füllstoff oder auch als Pigment eingesetzt wird. Solche Füllstoffe und Streichpigmente weisen in Europa ein starkes Wachstum auf, das deutlich über dem des mittleren Wirtschaftswachstums liegt.

In jüngster Zeit besteht erhöhtes Interesse an besonders feinem Calciumcarbonat, da extrem feine Partikel, deren Mehrheit unterhalb von 1 Mikrometer liegt, eine zunehmende Verbreitung als Füllstoffe oder Streichpigmente finden. Hintergrund dafür ist, dass solche Substanzen die Deckfähigkeit für Farben und Lacke deutlich erhöhen und besonders hohe Glanzgrade der Farben ermöglichen.

Die großtechnische Herstellung von gefälltem Calciumcarbonat wird in der Regel in gerührten Behältnissen durchgeführt, wobei die Kohlendioxidhaltigen Gase zumeist mittels Tauchrohre, Düsen oder unterschiedlich geartete Kanäle unter die gerührte Oberfläche einer wässrigen Calciumhydroxid-Suspension eindosiert werden.

Solche Herstellungsprozesse werden sowohl im Batchbetrieb, als auch in kontinuierlichen (fortlaufenden) Verfahren betrieben. Solche Batch-Herstellungsverfahren werden beispielsweise im amerikanischen Patent US 4,793,985 bzw. in der EP 369 650 vorgeschlagen. US 2,058,503 legt ebenfalls eine Produktion von Calciumcarbonat offen.

Um eine befriedigende Raum-/Zeit-Ausbeute und damit eine möglichst hohe Wirtschaftlichkeit zu erreichen, haben sich jedoch zumeist kontinuierliche Verfahren etabliert.

Ein solches kontinuierliches Verfahren ist beispielsweise in der DE 696 20 187 T2 beschrieben. Darin wird eine gerührte Reaktionszelle vorgeschlagen, die von der Calciumhydroxid-Suspension kontinuierlich durchströmt wird, während gleichzeitig CO₂-haltige Rauchgase bei Normaldruck unter die Oberfläche der Suspension eingeleitet werden. Nachteilig ist hierbei jedoch, dass aufgrund mangelnder Umsatzraten gleich mehrere solcher Reaktionszellen in Reihe geschaltet werden müssen, um einen vollständigen Umsatz des Calciumhydroxids mit dem CO₂ zu erreichen. Weiterhin muss das CO₂-haltige Rauchgas in großem stöchiometrischem Überschuss eingesetzt werden, da ein erheblicher Teil des Gases ungenutzt aus der Suspension über die gerührte Oberfläche zur Atmosphäre entweicht. Weiterhin sind solche Vielstufigen Anlagen komplex und Investitionsintensiv. Ebenso ist der Platzbedarf für solche Anlagen erheblich. Ein wesentlicher Nachteil besteht insbesondere darin, dass die Herstellung von besonders feinem Calciumcarbonat in konventionell gerührten Reaktionsbehältnissen schwierig ist. Insbesondere extrem feine Partikel mit einer Korngröße unterhalb von einem Mikrometer lassen sich in solchen Anlagen nicht sinnvoll erzeugen.

Grundsätzlich wäre es wünschenswert, feinstes Calciumcarbonat in kontinuierlichen Prozessen herstellen zu können. Weiterhin wäre es von großem Vorteil, solche hochfeinen Calciumcarbonate auch in kleineren delokalen Anlagen produzieren zu können, beispielsweise auch an Standorten, wo besonders geeignete CO₂-haltige Gase aus Verbrennungsprozessen anfallen, oder wo der Einsatz von vor Ort frisch hergestelltem Feinst-Calciumcarbonat Vorteile in der Weiterverarbeitung bietet.

Verfahren zur Herstellung von partikelförmigen Calciumcarbonaten sind weiterhin aus der DE 196 43 657 A1, der US 2 964 382 A und der GB 907 156 A bekannt.

Für die vorliegende Erfindung hat sich daher die Aufgabe gestellt, ein Verfahren zur kontinuierlichen Herstellung von gefälltem Calciumcarbonat bereitzustellen, das die Nachteile des Standes der Technik nicht aufweist, sondern die hocheffiziente Herstellung insbesondere von extrem feinen Calciumcarbonat-Qualitäten auf kleinstem Raum mit sehr niedrigem Investitionsbedarf gestattet.

Diese Aufgabe wird durch ein Verfahren mit den Merkmalen des Anspruches 1 gelöst, wobei die Suspension und die kohlendioxidhaltigen Gase durch einen Reaktionsraum geleitet werden, der lediglich Öffnungen zur Eintrittsseite und Austrittsseite aufweist, und in dem die wässrige Suspension und die Kohlendioxidhaltigen Gase als Reaktionsgemisch mittels einer oder mehrerer rotierender Vorrichtungen die auf Umfangsgeschwindigkeiten von mehr als 5 Meter pro Sekunde beschleunigt werden, wobei erfindungsgemäß der Reaktionsraum in Form einer Kreiselpumpe ausgebildet wird, deren Laufrad die rotierende Vorrichtung bildet, wodurch zwischen der Eintrittsseite und der Austrittsseite des Reaktionsraums eine Druckdifferenz von größer als 200 mbar erzeugt wird, und wodurch die Suspension und die Kohlendioxidhaltigen Gase intensiv vermischt und gleichzeitig dabei durch den Reaktionsraum hindurch gefördert und auf der Austrittsseite durch eine Druckstrecke geführt werden.

Es hat sich gezeigt, dass sich als Reaktionsraum insbesondere Kreiselpumpen eignen. Bei Kreiselpumpen handelt es sich um Strömungsmaschinen, die mittels einem oder mehreren rotierenden Laufrädern die Zentrifugalkraft zur Förderung von Flüssigkeiten nutzten. Flüssigkeit, die über die Eintrittsseite in die Kreiselpumpe eintritt, wird vom rotierenden Pumpenrad mitgerissen und zunächst auf einer Kreisbahn nach außen gezwungen. Die dabei aufgenommene Bewegungsenergie der Flüssigkeit erhöht den Druck innerhalb der Pumpe und presst die Flüssigkeit in die Austrittsseite. Solche Kreiselpumpen werden in verschiedenen Konstruktionsformen angeboten. Unter anderem auch als Mehrphasenpumpen, die neben Flüssigkeiten auch Feststoffpartikel und insbesondere Gase gleichzeitig fördern können.

Im erfindungsgemäßen Verfahren wird eine solche Pumpe als Reaktionsraum genutzt, indem eine Suspension bestehend aus Calciumhydroxid und Wasser und gleichzeitig CO₂-haltige Gase über die Eintrittsseite zugeführt werden. Hierbei hat sich gezeigt, dass die in der Pumpe herrschenden turbulenten Vermischungen der Komponenten und insbesondere die extrem hohen Scherkräfte zu einem nahezu idealen chemischen Umsatz des Dreiphasengemisches führen und dabei Korngrößen des Calciumcarbonats von kleiner als 1 Mikrometer erhalten werden können.

Ein weiterer Vorteil des Verfahrens besteht darin, dass es ein sehr großes Spektrum von möglichen Parametereinstellungen aufweist, um größtmöglichen Einfluss auf Korngröße und Morphologie des erzeugten Calciumcarbonats bei maximaler Raum-/Zeit-Ausbeute nehmen zu können.

Hierbei ist es vorteilhaft, dass die Reaktionspartner unmittelbar vor Eintritt in den Reaktionsraum kontinuierlich zusammengemischt werden, um das Reaktionsgemisch in möglichst homogenisierter Form der Eintrittsseite des Reaktionsraumes zuzuführen.

Es hat sich weiterhin herausgestellt, dass die aufgrund der Verdichtung im Reaktionsraum resultierende Druckstrecke auf der Austrittsseite, die beispielsweise in Form einer aufsteigenden Rohrleitung ausgebildet wird, zu einer starken Verkürzung der Reaktionszeiten führt. Hintergrund hierfür ist, dass die Lösungsgeschwindigkeit des Kohlendioxids im Wasser unter herrschendem Überdruck wesentlich erhöht ist. Weiterhin steigt die maximale Lösungskonzentration des Kohlendioxids, die dem herrschenden Druck proportional ist.

Es hat sich gezeigt, dass das Verfahren vorteilhaft in einem Druckbereich von 0,2 bis 50 bar(ü) durchgeführt werden kann. Insbesondere bei Einstellung von relativ hohen Drücken, beispielsweise im Bereich von 10 bis 50 bar(ü)führt dies zu einer extremen Verkürzung der Reaktionszeiten auf bis zu kleiner 5% der Reaktionszeiten gegenüber dem Stand der Technik und zu einer enormen Erhöhung des Umsetzungsgrades auf bis zu oberhalb von 95% des eingesetzten Kohlendioxids.

Der in der Druckstecke herrschende Druck kann dabei durch die bei der Förderung zu überwindenden hydrostatischen Höhe gezielt eingestellt werden.

Eine weitere bevorzugte Ausführungsform besteht darin, die Druckstrecke mittels einer Druckhaltearmatur einzudrosseln, wodurch der Druck des Reaktionsgemisches gezielt, und unabhängig von der Rohrleitungsführung und Rohrleitungslänge, eingestellt werden kann.

Beispielsweise kann die Verweilzeit des Reaktionsgemisches auch durch eine schlangenförmige Rohrleitung erhöht werden, ohne auf eine kompakte Bauform der Anlage verzichten zu müssen.

Kreiselpumpen können prinzipiell auch gegen gedrosselte oder gar geschlossene Armaturen auf deren Austrittsseite schadlos betrieben werden. Je nach zunehmendem Androsselungsgrad wird die vom Antrieb erzeugte mechanische Energie zunehmend in das Reaktionsgemisch im Pumpengehäuse eingetragen. Das bewirkt eine Erhöhung der Scherenergie pro Volumeneinheit des Reaktionsgemisches sowie eine zunehmende Annäherung des Flüssigkeitsdrucks auf der Austrittsseite an den maximal erreichbaren Betriebsdruck der eingesetzten Kreiselpumpe. Weiterhin wird dadurch die Verweilzeit für die Reaktion unter turbulenten Durchmischungsbedingungen nahezu beliebig erhöht.

Es hat sich überraschend gezeigt, dass eine solche Ausführungsform des erfindungsgemäßen Verfahrens eine nahezu ideale Steuerung des Herstellungsprozesses von Calciumcarbonat erlaubt. So können durch geeignete Einstellung der Druckhaltearmatur derart gezielte Einstellungen von spezifischem Scherkrafteintrag, Verweilzeit und Druck vorgenommen werden, dass die reproduzierbare Erzeugung von definierten Korngrößen des Calciumcarbonats im Reaktionsraum möglich ist. Insbesondere können auch durch einen sehr hohen Androsselungsgrad der Druckhaltearmatur Partikelgrössen erzeugt werden, deren mittlere Korngröße signifikant unterhalb von 1 Mikrometer liegen.

Weiterhin kann die Anlage auch so gesteuert werden, dass ein recht hoher Betriebsdruck mit kurzen Verweilzeiten, das heißt mit hohen Durchlaufgeschwindigkeiten kombiniert wird. Dadurch kann insbesondere für Produktqualitäten mit moderaten Anforderungen an die Partikelfeinheit eine extrem hohe Raum-/ZeitAusbeute bei der Herstellung realisiert werden.

Für die gezielte Beeinflussung der Kristallmorphologie des erhaltenen Calciumcarbonats ist es erforderlich, die Reaktionstemperatur im Reaktionsraum zu steuern. Dies kann vorteilhaft durch Nutzung eines Wärmetauschers geschehen, durch den die Suspension bestehen aus Calciumhydroxid und Wasser vor Eintritt in den Reaktionsraum hindurch geleitet wird. Je nach Ausführungsform kann auch die Durchleitung des gesamten Reaktionsgemisches, das heißt der Suspension zusammen mit dem CO₂-haltigen Gas durch den Wärmetauscher erfolgen.

Der Wärmetauscher kann dabei sowohl als Kühler, oder auch als Aufheizer fungieren, indem ein Kühl- bzw. Heizmedium auf der anderen Mediumseite des Wärmetauschers eingesetzt wird. Die Regelung kann vorzugsweise über die Durchflussmengenregelung des Kühl- bzw. Wärmemediums erfolgen, wobei als Steuergröße die Temperatur des Reaktionsgemisches vor Eintritt in den Reaktionsraum oder bevorzugt die Temperatur des Reaktionsgemisches nach Austritt aus dem Reaktionsraum verwendet werden kann.

Als besonders vorteilhaft hat sich eine Ausführungsform des Verfahrens erwiesen, die die Einbindung eines Zwischengefäßes vorsieht, über das das nach der Druckstrecke erhaltene Reaktionsgemisch zumindest teilweise im Kreislauf geführt, und vor der Eintrittsseite des Reaktionsraums erneut mit einer Suspension bestehend aus Wasser und Calciumhydroxid sowie mit kohlendioxidhaltigem Gas kontinuierlich vermischt wird. Dies hat den Vorteil, dass das Verfahren hinsichtlich der mittleren Verweilzeit im Reaktionsraum und in der Druckstrecke noch wesentlich flexibler gesteuert werden kann.

Weiterhin kann bei dieser Ausführungsform eine besonders vorteilhafte Steuerung der Reaktionstemperatur dergestalt erfolgen, dass das Reaktionsgemisch nach dem Austritt aus dem Reaktionsraum mittels eines Wärmetauschers über einen Regelkreis temperiert wird und als Steuergrösse für diesen Regelkreis die Temperatur des im Kreislauf geführten Reaktionsgemisches verwendet wird. Das hat den Vorteil, dass bei einer ausreichenden im Kreislauf geführten Menge des Reaktionsgemisches, eine sehr genaue Temperatursteuerung der sich im Kreislauf stationär ausbildenden Temperatur des Reaktionsgemisches erfolgen kann.

Die Einbindung eines Zwischengefäßes bietet darüber hinaus den Vorteil, dass die Zuführung der Suspension bestehend aus Wasser und Calciumhydroxid über dieses erfolgen kann. Das hat den Vorteil, dass die Vermischung mit dem im Kreislauf geführten Reaktionsgemisch in einem drucklosen Raum, beispielsweise über einen freien Zulauf erfolgen kann.

Weiterhin kann die Zuführungsmenge der Suspension sehr einfach automatisiert werden, indem der Füllstand des Zwischengefäßes als Steuergröße auf eine in der Zuführungsleitung der Suspension installierte Dosierarmatur wirkt.

Grundsätzlich bietet die Verwendung eines Zwischengefäßes auch die Möglichkeit, in dem Verfahren auch Calciumhydroxid in fester Form und/oder festes Calciumoxid als Rohstoffe einzusetzen, indem diese Feststoffe in das Zwischengefäß eindosiert werden. Calciumoxid würde in diesem Fall mit dem Wasser in der Suspension zunächst zu Calciumhydroxid reagieren, bevor es dann mit dem CO₂-haltigen Gas weiter zu Calciumcarbonat umgesetzt wird. Bei dieser Verfahrensweise muss dem Reaktionsgemisch zusätzlich Wasser zugeführt werden, um eine ausreichende Wassermenge für die Suspendierung von Calciumhydroxid und/oder die Hydratisierung von Calciumoxid zur Verfügung zu stellen.

Der Einsatz von Calciumoxid hat den großen Vorteil, dass der dem erfindungsgemäßen Verfahren üblicherweise vorgeschaltete Herstellungsschritt vom Calciumoxid zum Calciumhydroxid (Löschen von Branntkalk)gänzlich entfallen kann.

Es hat sich herausgestellt, dass das Verfahren auch noch dadurch verbessert werden kann, dass das CO₂-haltige Gas vor dem Vermischen mit der Suspension bestehend aus Wasser und Calciumhydroxid unter einem Überdruck von mindestens 0,2 bar zumindest teilweise in Wasser gelöst wird und die Dosierung als wässrige Lösung erfolgt. Dies kann erfolgen, indem das CO₂-haltige Gas mittels einer Kreiselpumpe, vorzugsweise mittels einer selbstansaugenden Kreiselpumpe und besonders bevorzugt mittels einer Seitenkanalpumpe vor dem Vermischen mit der Suspension bestehend aus Wasser und Calciumhydroxid in Wasser eingemischt, dadurch zumindest teilweise gelöst und mit Hilfe des erzeugten Pumpendrucks in die Eintrittsseite des Reaktionsraums als wässrige Lösung gefördert wird.

Es ist auch möglich, unter Druck verflüssigtes Kohlendioxid zu verwenden, und dieses direkt in die Zuführungsleitung zur Eintrittsseite des Reaktionsraumes zu entspannen.

Um eine kontinuierlichen Betrieb des erfindungsgemäßen Verfahrens zu gewährleisten ist es erforderlich, dass ein Teil des Reaktionsgemisches vorzugsweise kontinuierlich dem Kreislauf abgeführt und zur weitern Verwendung fortgeleitet wird. Dies geschieht bevorzugt über eine Dosierarmatur am Ende der Druckstrecke.

Eine besonders bevorzugte Ausführungsform der Erfindung sieht vor, dass das nach der Druckstrecke erhaltene Reaktionsgemisches in einen zweiten Reaktionsraum geleitet wird, wobei das Reaktionsgemisch vor Eintritt in den zweiten Reaktionsraum erneut mit CO₂-haltigem Gas vermischt wird und mittels des zweiten Reaktionsraums eine weitere Druckerhöhung stattfindet. Dadurch kann eine Reihenschaltung des Verfahrens mit steigenden Reaktionsdruckniveaus erreicht werden.

Hierbei wird vorzugsweise der zweite Reaktionsraum technisch analog zum ersten Reaktionsraum ausgeführt, sodass dieser ebenfalls eine nachgeschaltete Druckstrecke, Wärmetauscher auf der Austrittsseite des Reaktionsraums, Druckhaltearmatur, teilweise Kreislaufführung des Reaktionsgemisches über ein Zwischengefäß und eine Dosierarmatur zur Fortleitung des Reaktionsgemisches aufweist.

Besonders effizient kann das Verfahren dadurch ausgestaltet werden, dass die Zuführung des in den zweiten Reaktionsraum mittels einer dem zweiten Reaktionsraum vorgeschalteten Kreiselpumpe erfolgt, über die das Reaktionsgemisch aus dem Zwischengefäß des zweiten Reaktionsraums zumindest teilweise um Kreislauf geführt und mit dem CO₂-haltigen Gas vor Eintritt in den zweiten Reaktionsraum vermischt wird. Dadurch wird eine Druckerhöhung vor Eintritt des CO₂-haltigen Gases in den zweiten Reaktionsraum realisiert.

Je nach Anforderungen an den Feinheitsgrad und die Morphologie des Calciumcarbonats sowie in Abhängigkeit der erforderlichen Raum-/Zeitausbeute, können mehrere, bis zu 5 Reaktionsräume in Reihe geschaltet werden. Dadurch können problemlos Reaktionsdrücke von bis zu 50 bar(ü) in der letzten Reaktionsraumstufe realisiert werden, ohne dass hierfür auf spezielle Hochdruck-Kreiselpumpen zurückgegriffen werden müsste.

Die Fortleitung des Reaktionsgemisches über die jeweilige Dosierarmatur des vorgeschalteten Reaktionsraums in den jeweils nachgeschalteten Reaktionsraum wird vorzugsweise über den Füllstand des Zwischengefäßes des nachgeschalteten Reaktionsraums automatisch geregelt.

Um eine vollautomatische Verfahrensführung zu gewährleisten, ist besonders bevorzugt, dass die Fortleitung über die Dosierarmatur des letzten in Reihe geschalteten Reaktionsraums automatisch über den pH-Wert des Reaktionsgemisches im letzten in Reihe geschalteten Reaktionsraum erfolgt.

Die Erfindung schlägt eine vollautomatische Herstellung von Calciumcarbonat vor, die eine nahezu unbeschränkte Einstellung der qualitätsrelevanten Prozessparameter und deren Kombinationen zueinander erlaubt, um gefälltes Calciumcarbonat in jeder gewünschten Kristallmodifikation und mit einer Partikelfeinheit von kleiner als einem Mikrometer herzustellen. Die hierfür notwendigen Aggregate und Behälter weisen aufgrund der kontinuierlichen Fahrweise und aufgrund der Nutzung von Kreiselpumpen als Reaktionsräume nur sehr geringe Volumina und Abmessungen auf.

Daher ist es auch möglich, solche Vorrichtungen sowohl in einstufiger, als auch in mehrstufiger Bauweise in mobiler Form, beispielsweise in transportablen Container-Behältnissen auszuführen, um die delokale Herstellung der Calciumcarbonate auch direkt beim weiterverarbeitenden Kunden zu ermöglichen. Das ist insbesondere dann interessant, wenn an solchen Standorten CO₂-Ströme zur Verfügung stehen, die als CO₂-haltiges Gas eingesetzt werden können, so dass sich damit CO₂-Emissionen reduzieren lassen.

Besonders attraktiv ist auch die Perspektive, festes Calciumhydroxid in solchen delokalen Anlagen einzusetzen. Damit kann zum einen der Herstellungsschritt vom Calciumoxid durch Hydratisierung (Löschung) zum Calciumhydroxid gänzlich entfallen. Insbesondere bei Kunden, die wässrige Suspensionen von gefälltem Calciumcarbonat für die Weiterverarbeitung beziehen, besteht die Möglichkeit, auf den Transport solcher Suspensionen zu verzichten und diesen durch einen wesentlich effizienteren Transport von trockenem Calciumoxid zu ersetzen.

Nachfolgend wird anhand der beigefügten Zeichnungen näher auf Ausführungsbeispiele der Erfindung eingegangen. Es zeigen:
- Fig. 1: eine einstufige Ausführungsform des Verfahrens;
- Fig. 2: eine optimierte Ausführungsform eines einstufigen Verfahrens;
- Fig. 3: eine optimierte Ausführungsform eines mehrstufigen und vollautomatischen Verfahrens.

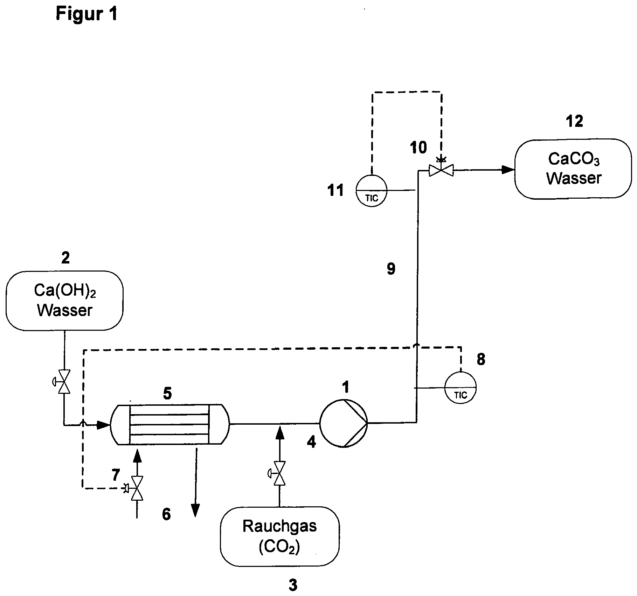

Bei der Variante nach Fig. 1 wird das Verfahren in einem Durchlaufreaktor ausgebildet. In den Reaktionsraum 1, der als Kreiselpumpe ausgebildet ist, wird eine Suspension 2, bestehend aus Calciumhydroxid und Wasser, und CO₂-haltiges Rauchgas 3 über die Eintrittsseite 4 zugeführt. Die Steuerung der Reaktionstemperatur erfolgt durch Temperierung der Suspension durch kontinuierliches Durchleiten durch einen Wärmetauscher 5, der alternativ als Kühler oder Aufheizer fungieren kann. Dies geschieht, indem der Wärmetauscher auf der Sekundärmediumseite 6 mit Kühlwasser oder mit Heißwasser beaufschlagt wird. Die Regelung der Reaktionstemperatur erfolgt über die Durchlaufmenge des Sekundärmediums, die über eine Regelarmatur 7 gesteuert wird. Als Steuergrösse kann vorzugsweise die Temperatur des Reaktionsgemisches auf der Austrittsseite 8 des Reaktionsraums dienen.

Auf der Austrittsseite 8 des Reaktionsraums wird eine Druckstrecke 9 ausgebildet, deren Druck über eine Druckhaltearmatur 10 geregelt wird. Als Steuergröße dient der Druck 11 innerhalb der Druckstrecke. Nach der Druckhaltearmatur fällt kontinuierlich eine Suspension bestehend aus gefälltem Calciumcarbonat und Wasser 12 für die weitere Verarbeitung an.

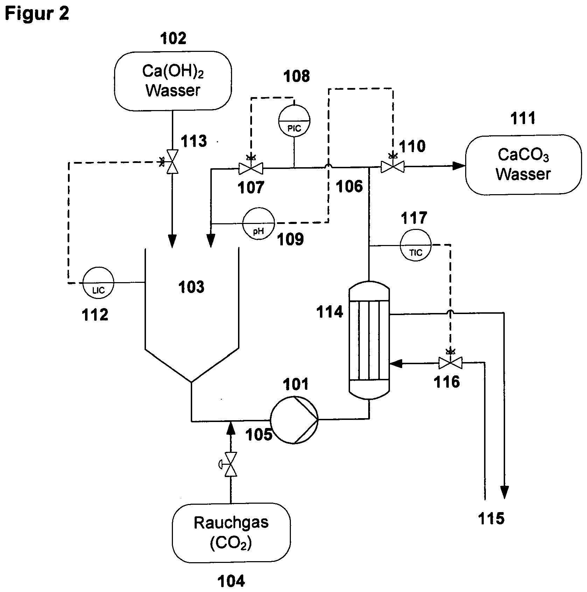

Bei der Variante nach Fig. 2 wird das Verfahren als vollautomatische Anlage ausgebildet, wobei ein Zwischengefäß für die Realisierung eines automatisierten Mess- und Regelkonzeptes genutzt wird.

In den Reaktionsraum 101, der als Kreiselpumpe ausgebildet ist, wird eine Suspension 102, bestehend aus Calciumhydroxid und Wasser aus einem Zwischengefäß 103 sowie CO₂-haltiges Rauchgas 104 über die Eintrittsseite 105 zugeführt. In der Kreiselpumpe wird das dreiphasige Reaktionsgemisch unter turbulenter Durchmischung und unter de Einwirkung hoher Scherkräfte zur Reaktion gebracht. Dabei findet eine Druckerhöhung im Reaktionsgemisch statt. Diese Druckerhöhung wird genutzt, um nach der Austrittsseite eine Druckstrecke 106 auszubilden. Der Druck in dieser Druckstrecke wird über eine Druckregelarmatur 107 geregelt, wobei der Druck 108 in der Druckstrecke als Steuergröße dient.

Nach der Druckregelarmatur wird das Reaktionsgemisch entspannt und teilweise im Kreislauf über das Zwischengefäß 103 geführt. Als Steuerkriterium für den chemischen Umsetzungsgrad im erfindungsgemäßen Verfahren dient der pH-Wert 109 des Reaktionsgemisches. Dieser wirkt als Steuergröße auf eine Dosierarmatur 110, über die der andere Teil des Reaktionsgemisches, nämlich die Produktsuspension bestehend aus gefälltem Calciumcarbonat und Wasser 111 kontinuierlich aus dem Prozess ausgeschleust und zur weiteren Verwendung fortgeleitet wird. Entsprechend der pH-gesteuerten Ausschleusung der Produktsuspension sinkt der Füllstand im Zwischengefäß 103. Dieser Füllstand 112 steuert automatisch die Zufuhr von neuen Ausgangsstoffen über die Dosierarmatur 113.

Die Steuerung der Reaktionstemperatur erfolgt durch Temperierung des Reaktionsgemisches durch kontinuierliches Durchleiten durch einen Wärmetauscher 114, der alternativ als Kühler oder Aufheizer fungieren kann. Dies geschieht, indem der Wärmetauscher auf der Sekundärmediumseite 115 mit Kühlwasser oder mit Heißwasser beaufschlagt wird. Die Regelung der Reaktionstemperatur erfolgt über die Durchlaufmenge des Sekundärmediums, die über eine Regelarmatur 116 gesteuert wird. Als Steuergrösse kann vorzugsweise die Temperatur des Reaktionsgemisches auf der Austrittsseite des Reaktionsraums 117 dienen.

Das in Figur 2 aufgezeigte Ausführungsbeispiel zeigt die Realisierung einer kontinuierlichen und vollautomatischen Produktionsanlage zur Herstellung unterschiedlichster Qualitäten von gefälltem Calciumcarbonat. Eine solche Anlage weist einen derart geringen Platzbedarf auf, dass auch mobile Bauformen realisierbar sind.

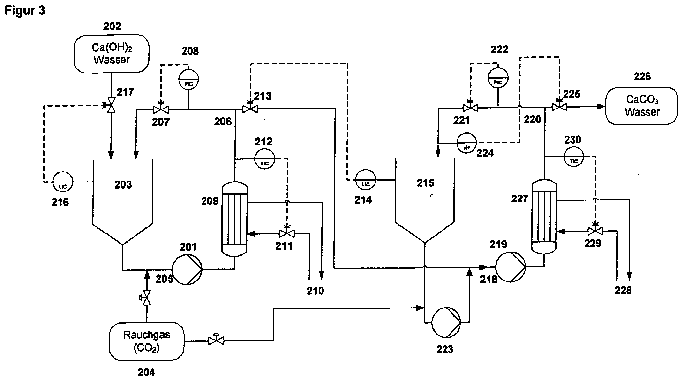

Bei der Ausgestaltung des Verfahrens entsprechend Fig. 3 wird in den Reaktionsraum 201 der ersten Prozessstufe, der als Kreiselpumpe ausgebildet ist, eine Suspension 202, bestehend aus Calciumhydroxid und Wasser aus einem Zwischengefäß 203 sowie CO₂-haltiges Rauchgas 204 über die Eintrittsseite 205 zugeführt. In der Kreiselpumpe wird das dreiphasige Reaktionsgemisch unter turbulenter Durchmischung und unter de Einwirkung hoher Scherkräfte zur Reaktion gebracht. Dabei findet eine Druckerhöhung im Reaktionsgemisch statt. Diese Druckerhöhung wird genutzt, um nach der Austrittsseite eine Druckstrecke 206 auszubilden. Der Druck in dieser Druckstrecke wird über eine Druckregelarmatur 207 geregelt, wobei der Druck 208 in der Druckstrecke als Steuergröße dient.

Nach der Druckregelarmatur wird das Reaktionsgemisch entspannt und teilweise im Kreislauf über das Zwischengefäß 203 geführt.

Die Steuerung der Reaktionstemperatur erfolgt durch Temperierung des Reaktionsgemisches durch kontinuierliches Durchleiten durch einen Wärmetauscher 209, der alternativ als Kühler oder Aufheizer fungieren kann. Dies geschieht, indem der Wärmetauscher auf der Sekundärmediumseite 210 mit Kühlwasser oder mit Heißwasser beaufschlagt wird. Die Regelung der Reaktionstemperatur erfolgt über die Durchlaufmenge des Sekundärmediums, die über eine Regelarmatur 211 gesteuert wird. Als Steuergrösse kann vorzugsweise die Temperatur des Reaktionsgemisches auf der Austrittsseite des Reaktionsraums 212 dienen.

Die Fortleitung des Reaktionsgemisches in die zweite Prozessstufe erfolgt geregelt über eine Dosierarmatur 213, wobei als Steuergröße der Füllstand 214 des Zwischengefäßes 215 der zweiten Prozessstufe dient.

Der Füllstand 216 des Zwischengefäßes 203 der ersten Prozessstufe nimmt entsprechend der Fortleitung des Reaktionsgemisches ab. Der Ausgleich des Füllstandes erfolgt automatisch durch Zuführung frischer Calciumhydroxid-Suspension 202 über die Dosierarmatur 217, wobei der Füllstand 216 als Steuergrösse dient.

Die Fortleitung des Reaktionsgemisches aus der ersten Prozessstufe erfolgt auf die Eintrittsseite 218 des zweiten Reaktionsraums 219. Dort wird erneut CO₂-haltiges Gas 204 zugesetzt, wobei mittels des zweiten Reaktionsraums 219, der ebenfalls als Kreiselpumpe ausgebildet ist, eine weitere Druckerhöhung stattfindet, sodass in der zweiten Druckstrecke 220 ein gegenüber der ersten Druckstrecke deutlich erhöhter Druck eingestellt werden kann. Die Regelung des Drucks erfolgt analog der ersten Prozessstufe über die Druckregelarmatur 221 wobei als Steuergröße der Druck 222 in der Druckstrecke dient.

Nach der Druckregelarmatur wird das Reaktionsgemisch entspannt und teilweise im Kreislauf über das Zwischengefäß 215 geführt. Von dort gelangt das im Kreislauf geführte Reaktionsgemisch zur Umwälzpumpe 223 zurück auf die Eintrittsseite des Reaktionsraums 219. Die Umwälzpumpe dient dabei zum einen zur Druckerhöhung des Reaktionsgemisches vor Eintritt in den Reaktionsraum der zweiten Prozessstufe und zum anderen zur Einmischung des CO2-haltigen Gases und ebenfalls zu dessen Druckerhöhung vor Eintritt in den Prozessraum der zweiten Prozessstufe.

Als Steuerkriterium für den chemischen Umsetzungsgrad im erfindungsgemäßen Verfahren dient der pH-Wert 224 des Reaktionsgemisches. Dieser wirkt als Steuergröße auf eine Dosierarmatur 225, über die der andere Teil des Reaktionsgemisches, nämlich die Produktsuspension bestehend aus gefälltem Calciumcarbonat und Wasser 226 kontinuierlich aus dem Prozess ausgeschleust und zur weiteren Verwendung fortgeleitet wird. Entsprechend der pH-gesteuerten Ausschleusung der Produktsuspension sinkt der Füllstand im Zwischengefäß 215. Dieser Füllstand 214 steuert, wie bereits weiter oben beschrieben, automatisch die Zufuhr von Reaktionsgemisch aus der ersten Prozessstufe über die Dosierarmatur 213.

Die Steuerung der Reaktionstemperatur der zweiten Prozessstufe erfolgt durch Temperierung des Reaktionsgemisches durch kontinuierliches Durchleiten durch den Wärmetauscher 227, der alternativ als Kühler oder Aufheizer fungieren kann. Dies geschieht analog der ersten Prozessstufe, indem der Wärmetauscher auf der Sekundärmediumseite 228 mit Kühlwasser oder mit Heißwasser beaufschlagt wird. Die Regelung der Reaktionstemperatur erfolgt über die Durchlaufmenge des Sekundärmediums, die über die Regelarmatur 229 gesteuert wird. Als Steuergrösse kann vorzugsweise die Temperatur des Reaktionsgemisches auf der Austrittsseite des Reaktionsraums 230 dienen.

Das in Figur 3 aufgezeigte Ausführungsbeispiel zeigt die Realisierung einer kontinuierlichen und vollautomatischen Produktionsanlage zur Herstellung unterschiedlichster Qualitäten von gefälltem Calciumcarbonat. Prinzipiell können auch mehr als zwei Prozessstufen hintereinander angeordnet werden.

Diese Reihen-Fahrweise erlaubt die Durchführung des Verfahrens mit sehr hohen Durchsätzen bei gleichzeitig nahezu vollständigen Gasumsatzraten.

## Patentansprüche

1. Verfahren zur kontinuierlichen Herstellung von gefälltem Calciumcarbonat durch temperaturgeregelte Reaktion einer Suspension im Wesentlichen bestehend aus Calciumhydroxid und Wasser mit kohlendioxidhaltigen Gasen, wobei die Suspension und die kohlendioxidhaltigen Gase durch einen Reaktionsraum (1; 101; 201) geleitet werden, der lediglich Öffnungen zur Eintrittsseite (4; 105; 205) und Austrittsseite aufweist, und in dem die wässrige Suspension und die kohlendioxidhaltigen Gase als Reaktionsgemisch auf Umfangsgeschwindigkeiten von mehr als 5 Meter pro Sekunde beschleunigt werden, **dadurch gekennzeichnet, dass** der Reaktionsraum (1; 101; 201) in Form einer Kreiselpumpe ausgebildet wird, deren Laufrad die rotierende Vorrichtung bildet, wodurch zwischen der Eintrittsseite und der Austrittsseite (8) des Reaktionsraums (1; 101; 201) eine Druckdifferenz von größer als 200 mbar erzeugt wird, und wodurch die Suspension und die kohlendioxidhaltigen Gase intensiv vermischt und gleichzeitig durch den Reaktionsraum (1; 101; 201) hindurch gefördert, und auf der Austrittsseite durch eine Druckstrecke (9; 106; 206) geführt werden.

2. Verfahren nach Anspruch 1, **dadurch gekennzeichnet, dass** die Suspension bestehend aus Wasser und Calciumhydroxid mit den kohlendioxidhaltigen Gasen vor Eintritt in den Reaktionsraum (1; 101; 201) kontinuierlich vermischt werden.

3. Verfahren nach einem der vorherigen Ansprüche, **dadurch gekennzeichnet, dass** die Druckstrecke auf der Austrittsseite des Reaktionsraums in Form einer aufsteigenden Rohrleitung ausgebildet wird, wodurch der Druck des Reaktionsgemisches durch die bei der Förderung zu überwindenden hydrostatischen Höhe bestimmt wird.

4. Verfahren nach einem der vorherigen Ansprüche, **dadurch gekennzeichnet, dass** die Druckstrecke (9; 106; 206) auf der Austrittsseite mittels einer Druckhaltearmatur 10; 110; 207) eingedrosselt wird, wodurch der Druck des Reaktionsgemisches gezielt eingestellt wird.

5. Verfahren nach einem der vorherigen Ansprüche, **dadurch gekennzeichnet, dass** der Druck in der Druckstrecke (9; 106, 206) in einem Bereich von 0,2 bis 50 bar Überdruck, bevorzugt in einem Bereich von 1 bis 30 bar Überdruck und besonders bevorzugt in einem Bereich von 2 bis 10 bar Überdruck eingestellt wird.

6. Verfahren nach einem der vorherigen Ansprüche, **dadurch gekennzeichnet, dass** die Suspension bestehend aus Calciumhydroxid und Wasser oder das Reaktionsgemisch zumindest teilweise vor Eintritt in den Reaktionsraum (1) mittels eines Wärmetauschers (5) über einen Regelkreis (7) temperiert wird und als Steuergrösse für diesen Regelkreis die Temperatur des Reaktionsgemisches vor Eintritt in den Reaktionsraum oder die Temperatur des Reaktionsgemisches nach Austritt (8) aus dem Reaktionsraum (1) verwendet wird.

7. Verfahren nach einem der vorherigen Ansprüche, **dadurch gekennzeichnet, dass** das nach der Druckstrecke (106; 206) erhaltene Reaktionsgemisch teilweise über ein Zwischengefäß (103; 203) im Kreislauf geführt, und vor der Eintrittsseite (105; 205) des Reaktionsraums (101; 201) erneut mit einer Suspension bestehend aus Wasser und Calciumhydroxid sowie mit kohlendioxidhaltigem Gas kontinuierlich vermischt wird.

8. Verfahren nach Anspruch 7, **dadurch gekennzeichnet, dass** das Reaktionsgemisch nach dem Austritt aus dem Reaktionsraum (101; 201) mittels eines Wärmetauschers (114; 209) über einen Regelkreis temperiert wird und als Steuergrösse für diesen Regelkreis die Temperatur des im Kreislauf geführten Reaktionsgemisches verwendet wird.

9. Verfahren nach Anspruch 7, **dadurch gekennzeichnet, dass** die Suspension bestehend aus Wasser und Calciumhydroxid dem Zwischengefäß (103; 203) zudosiert und dort mit dem im Kreislauf geführten Reaktionsgemisch vermischt wird.

10. Verfahren nach Anspruch 7, **dadurch gekennzeichnet, dass** die zugeführte Menge der Suspension bestehend aus Wasser und Calciumhydroxid mittel Dosierarmatur automatisch geregelt wird, wobei der Füllstand (112; 216) des Zwischengefäßes (103; 203) als Steuergröße dient.

11. Verfahren nach Anspruch 7, **dadurch gekennzeichnet, dass** dem Zwischengefäß (103; 203) Calciumhydroxid in fester Form zugeführt und/oder festes Calciumoxid eingesetzt wird, das in dem wässrigen Reaktionsgemisch mit Wasser zu Calciumhydroxid hydratisiert.

12. Verfahren nach Anspruch 7, **dadurch gekennzeichnet, dass** dem Reaktionsgemisch zusätzlich Wasser zugeführt wird, um eine ausreichende Wassermenge für die Suspendierung von Calciumhydroxid und/oder die Hydratisierung von Calciumoxid zur Verfügung zu stellen.

13. Verfahren nach einem der vorherigen Ansprüche, **dadurch gekennzeichnet, dass** das kohlendioxidhaltige Gas vor dem Vermischen mit der Suspension bestehend aus Wasser und Calciumhydroxid unter einem Überdruck von mindestens 0,2 bar zumindest teilweise in Wasser gelöst wird und oder unter Druck verflüssigtes Kohlendioxid verwendet wird.

14. Verfahren nach Anspruch 13, **dadurch gekennzeichnet, dass** das kohlendioxidhaltige Gas mittels einer Kreiselpumpe, vorzugsweise mittels einer selbstansaugenden Kreiselpumpe und besonders bevorzugt mittels einer Seitenkanalpumpe vor dem Vermischen mit der Suspension bestehend aus Wasser und Calciumhydroxid in Wasser eingemischt, dadurch zumindest teilweise gelöst und mit Hilfe des erzeugten Pumpendrucks als wässrige Lösung in die Eintrittsseite des Reaktionsraums gefördert wird.

15. Verfahren nach Anspruch 7, **dadurch gekennzeichnet, dass** das nach der Druckstrecke erhaltene Reaktionsgemisch teilweise über eine Dosierarmatur (10; 110; 225) aus dem System kontinuierlich oder batchweise entnommen und fortgeleitet wird.

16. Verfahren nach Anspruch 15, **dadurch gekennzeichnet, dass** das nach der Druckstrecke (206) erhaltene Reaktionsgemisch in einen zweiten Reaktionsraum (219) geleitet, das Reaktionsgemisch vor Eintritt in den zweiten Reaktionsraum (219) erneut mit CO₂-haltigem Gas vermischt, und mittels des zweiten Reaktionsraums (219) der Druck erhöht wird, wodurch eine Reihenschaltung des Verfahrens mit steigenden Reaktionsdruckniveaus erreicht wird.

17. Verfahren nach Anspruch 16, **dadurch gekennzeichnet, dass** der zweite Reaktionsraum (219) analog zum ersten Reaktionsraum (201) eine nachgeschaltete Druckstrecke (220), Wärmetauscher (227) auf der Austrittsseite des Reaktionsraums (219), Druckhaltearmatur (221), teilweise Kreislaufführung des Reaktionsgemisches über ein Zwischengefäß (215) und eine Dosierarmatur (225) zur Fortleitung des Reaktionsgemisches aufweist.

18. Verfahren nach Ansprüchen 16 und 17, **dadurch gekennzeichnet, dass** das CO₂-haltige Gas dem zweiten Reaktionsraum (219) mittels einer dem zweiten Reaktionsraum vorgeschalteten Kreiselpumpe zugeführt wird, über die das Reaktionsgemisch aus dem Zwischengefäß des zweiten Reaktionsraums zumindest teilweise um Kreislauf geführt und mit dem CO₂-haltigen Gas vor Eintritt in den zweiten Reaktionsraum vermischt wird.

19. Verfahren nach den Ansprüchen 15 bis 18, **dadurch gekennzeichnet, dass** bis zu 5 Reaktionsräume in Reihe geschaltet werden und dass das Reaktionsgemisch über die jeweilige Dosierarmatur des vorgeschalteten Reaktionsraums in den jeweils nachgeschalteten Reaktionsraum fortgeleitet wird, wobei der Durchfluss über den Füllstand des Zwischengefäßes des nachgeschalteten Reaktionsraums geregelt wird.

20. Verfahren nach den Ansprüchen 15 bis 19, **dadurch gekennzeichnet, dass** das Reaktionsgemisch über die Dosierarmatur des letzten in Reihe geschalteten Reaktionsraums fortgeleitet wird, wobei der Durchfluss über den pH-Wert des Reaktionsgemisches im letzten in Reihe geschalteten Reaktionsraum erfolgt.

## Claims

1. Method for the continuous production of precipitated calcium carbonate by means of the temperature-controlled reaction of a suspension consisting essentially of calcium hydroxide and water with carbon dioxide-containing gases, wherein the suspension and the carbon dioxide-containing gases are conveyed through a reaction chamber (1; 101; 201), which only comprises openings to the inlet side (4; 105; 205) and outlet side, and in which the aqueous suspension and the carbon dioxide-containing gases are accelerated as a reaction mixture to circumferential speeds of more than 5 metres per second, **characterised in that** the reaction chamber (1; 101; 201) is designed in the form of a centrifugal pump, the impeller of which forms the rotating device, whereby between the inlet side and the outlet side (8) of the reaction chamber (1; 101; 201) a pressure difference is established of more than 200 mbar and whereby the suspension and the carbon dioxide-containing gases are mixed intensively and conveyed at the same time through the reaction chamber (1; 101; 201) and guided on the outlet side through a pressure section (9; 106; 206).

2. Method according to claim 1, **characterised in that** the suspension consisting of water and calcium hydroxide is mixed continually with the carbon dioxide-containing gases before entering the reaction chamber (1; 101; 201).

3. Method according to any of the preceding claims, **characterised in that** the pressure section on the outlet side of the reaction chamber is designed in the form of an ascending pipe, whereby the pressure of the reaction mixture is determined by the hydrostatic height to be overcome during conveying.

4. Method according to any of the preceding claims, **characterised in that** the pressure section (9; 106; 206) is throttled on the outlet side by means of a pressure-sustaining valve (10; 110; 207), whereby the pressure of the reaction mixture is specifically adjusted.

5. Method according to any of the preceding claims, **characterised in that** the pressure in the pressure section (9; 106, 206) is set within a range of 0.2 to 50 bar pressure, preferably in a range of 1 to 30 bar pressure and particular preferably in a range of 2 to 10 bar pressure.

6. Method according to any of the preceding claims, **characterised in that** the temperature of the suspension consisting of calcium hydroxide and water or the reaction mixture is controlled at least partly before entering the reaction chamber (1) by means of a heat exchanger (5) via a control circuit (7), and the temperature of the reaction mixture before entering the reaction chamber or the temperature of the reaction mixture after exiting (8) the reaction chamber (1) is used as a control parameter for said control circuit.

7. Method according to any of the preceding claims, **characterised in that** the reaction mixture obtained after the pressure section (106; 206) is guided in the circuit partly via an intermediate vessel (103; 203), and before the inlet side (105; 205) of the reaction chamber (101; 201) is again mixed continually with a suspension consisting of water and calcium hydroxide as well as carbon dioxide-containing gas.

8. Method according to claim 7, **characterised in that** the temperature of the reaction mixture after exiting the reaction chamber (101; 201) is controlled by means of a heat exchanger (114; 209) by a control circuit and the temperature of the reaction mixture guided in the circuit is used as a control parameter for said control circuit.

9. Method according to claim 7, **characterised in that** the suspension consisting of water and calcium hydroxide is added to the intermediate vessel (103; 203) and is mixed there with the reaction mixture guided in the circuit.

10. Method according to claim 7, **characterised in that** the added amount of suspension consisting of water and calcium hydroxide is controlled automatically by a metering valve, wherein the filling level (112; 216) of the intermediate vessel (103; 203) is used as a control parameter.

11. Method according to claim 7, **characterised in that** calcium hydroxide in solid form is added to the intermediate vessel (103; 203) and/or solid calcium oxide is used, which in the aqueous reaction mixture is hydrated with water to form calcium hydroxide.

12. Method according to claim 7, **characterised in that** water is added additionally to the reaction mixture in order to provide a sufficient amount of water for the suspension of calcium hydroxide and/or the hydration of calcium oxide.

13. Method according to any of the preceding claims, **characterised in that** the carbon dioxide-containing gas is at least partly dissolved in water before mixing with the suspension consisting of water and calcium hydroxide under pressure of at least 0.2 bar and/or pressure-liquefied carbon dioxide is used.

14. Method according to claim 13, **characterised in that** the carbon dioxide-containing gas is mixed in water by means of a centrifugal pump, preferably by means of a self-suctioning centrifugal pump and particularly preferably by means of a side-channel pump, before mixing with the suspension consisting of water and calcium hydroxide, at least partly dissolved by the latter and is conveyed by means of the generated pump pressure as an aqueous solution to the inlet side of the reaction chamber.

15. Method according to claim 7, **characterised in that** the reaction mixture obtained after the pressure section is partly removed from the system continually or in batches via a metering valve (10; 110; 225) and is conveyed further.

16. Method according to claim 15, **characterised in that** the reaction mixture obtained after the pressure section (206) is conveyed into a second reaction chamber (219), the reaction mixture before entering the second reaction chamber (219) is again mixed with C0₂-containing gas, and by means of the second reaction chamber (219) the pressure is increased, whereby there is a series connection of the method with increasing reaction pressure levels.

17. Method according to claim 16, **characterised in that** the second reaction chamber (219) similar to the first reaction chamber (201) comprises a downstream pressure section (220), heat exchanger (227) on the outlet side of the reaction chamber (219), pressure-sustaining valve (221), partly a recirculation of the reaction mixture via an intermediate vessel (215) and a metering valve (225) for directing the reaction mixture.

18. Method according to claims 16 and 17, **characterised in that** the C0₂-containing gas is supplied to the second reaction chamber (219) by means of a centrifugal pump upstream of the second reaction chamber, by means of which the reaction mixture is guided out of the intermediate vessel of the second reaction chamber at least partly around the circuit and is mixed with the C0₂ containing gas before entering the second reaction chamber.

19. Method according to claims 15 to 18, **characterised in that** up to 5 reaction chambers are connected in series and the reaction mixture is transmitted via the respective metering valve of the upstream reaction chamber into the respective downstream reaction chamber, wherein the throughput is controlled by the filling level of the intermediate vessel of the downstream reaction chamber.

20. Method according to claims 15 to 19, **characterised in that** the reaction mixture is transmitted via the metering valve of the last reaction chamber in the series, wherein the throughput is performed according to the pH value of the reaction mixture in the last reaction chamber in the series.

## Revendications

1. Procédé de fabrication en continu de carbonate de calcium précipité par réaction à température réglée d'une suspension constituée en substance d'hydroxyde de calcium et d'eau avec des gaz contenant du dioxyde de carbone, dans lequel la suspension et les gaz contenant du dioxyde de carbone sont acheminés à travers un espace réactionnel (1 ; 101 ; 201) qui présente simplement des ouvertures du côté d'entrée (4 ; 105 ; 205) et du côté de sortie et dans lequel la suspension aqueuse et les gaz contenant du dioxyde de carbone en tant que mélange réactionnel sont accélérés à des vitesses périphériques de plus de 5 mètres par seconde, **caractérisé en ce que** l'espace réactionnel (1 ; 101 ; 201) se présente sous la forme d'une pompe centrifuge, dont le rotor forme le dispositif rotatif si bien qu'une différence de pression de plus de 200 mbars apparaît entre le côté d'entrée et le côté de sortie (8) de l'espace réactionnel (1 ; 101 ; 201) et que la suspension et les gaz contenant du dioxyde de carbone sont mélangés de manière intensive et simultanément acheminés à travers l'espace réactionnel (1 ; 101 ; 201) et guidés du côté de sortie à travers une section sous pression (9 ; 106 ; 206).

2. Procédé selon la revendication 1, **caractérisé en ce que** la suspension constituée d'eau et d'hydroxyde de calcium avec les gaz contenant du dioxyde de carbone sont mélangés en continu avant l'entrée dans l'espace réactionnel (1 ; 101 ; 201).

3. Procédé selon l'une quelconque des revendications précédentes, **caractérisé en ce que** la section sous pression est formée sur le côté de sortie de l'espace réactionnel sous l'aspect d'une conduite tubulaire montante, si bien que la pression du mélange réactionnel est déterminée par la hauteur hydrostatique à surmonter lors du transport.

4. Procédé selon l'une quelconque des revendications précédentes, **caractérisé en ce que** la section sous pression (9 ; 106 ; 206) est étranglée du côté de sortie au moyen d'une garniture de maintien de pression (10; 110; 207), si bien que la pression du mélange réactionnel est réglée de manière adéquate.

5. Procédé selon l'une quelconque des revendications précédentes, **caractérisé en ce que** la pression dans la section sous pression (9 ; 106 ; 206) est réglée dans une plage de 0,2 à 50 bars de surpression, de préférence dans une plage de 1 à 30 bars de surpression et mieux encore dans une plage de 2 à 10 bars de surpression.

6. Procédé selon l'une quelconque des revendications précédentes, **caractérisé en ce que** la suspension constituée d'hydroxyde de calcium et d'eau ou le mélange réactionnel est tempéré(e) au moins en partie avant l'entrée dans l'espace réactionnel (1) au moyen d'un échangeur de chaleur (5) via un circuit régulateur (7) et l'on utilise comme grandeur de commande pour ce circuit régulateur la température du mélange réactionnel avant l'entrée dans l'espace réactionnel ou la température du mélange réactionnel après la sortie (8) de l'espace réactionnel (1).

7. Procédé selon l'une quelconque des revendications précédentes, **caractérisé en ce que** le mélange réactionnel obtenu après la section sous pression (106 ; 206) est guidé en partie via un réservoir tampon (103 ; 203) dans le circuit et, avant le côté d'entrée (105 ; 205) de l'espace réactionnel (101 ; 201), est à nouveau mélangé en continu avec une suspension constituée d'eau et d'hydroxyde de calcium ainsi que de gaz contenant du dioxyde de carbone.

8. Procédé selon a revendication 7, **caractérisé en ce que** le mélange réactionnel est tempéré après la sortie de l'espace réactionnel (101 ; 201) au moyen d'un échangeur de chaleur (114 ; 209) via un circuit régulateur et l'on utilise comme grandeur de commande pour ce circuit régulateur la température du mélange réactionnel guidé dans le circuit.

9. Procédé selon a revendication 7, **caractérisé en ce que** la suspension constituée d'eau et d'hydroxyde de calcium est ajoutée de manière dosée dans le réservoir tampon (103 ; 203) et y est mélangée avec le mélange réactionnel guidé dans le circuit.

10. Procédé selon a revendication 7, **caractérisé en ce que** la quantité ajoutée à la suspension constituée d'eau et d'hydroxyde de calcium est réglée automatiquement au moyen d'une garniture de dosage, dans lequel le niveau (112 ; 216) du réservoir tampon (103 ; 203) sert de grandeur de commande.

11. Procédé selon la revendication 7, **caractérisé en ce que** de l'hydroxyde de calcium sous forme solide est acheminé au réservoir tampon (103 ; 203) et/ou de l'oxyde de calcium solide est utilisé, lequel est hydraté dans le mélange réactionnel aqueux avec de l'eau pour former de l'hydroxyde de calcium.

12. Procédé selon a revendication 7, **caractérisé en ce que** l'on achemine au mélange réactionnel en plus de l'eau pour disposer d'une quantité d'eau suffisante pour la mise en suspension de l'hydroxyde de calcium et/ou pour l'hydratation de l'oxyde de calcium.

13. Procédé selon l'une quelconque des revendications précédentes, **caractérisé en ce que** le gaz contenant du dioxyde de carbone est dissous au moins en partie dans de l'eau avant le mélange avec la suspension constituée d'eau et d'hydroxyde de calcium sous une surpression d'au moins 0,2 bar et/ou l'on utilise du dioxyde de carbone liquéfié sous pression.

14. Procédé selon la revendication 13, **caractérisé en ce que** le gaz contenant du dioxyde de carbone est mélangé dans de l'eau au moyen d'une pompe centrifuge, de préférence au moyen d'une pompe centrifuge auto-aspirante et mieux encore au moyen d'une pompe à canal latéral avant le mélange avec la suspension constituée d'eau et d'hydroxyde de calcium, est de ce fait au moins en partie dissous et est acheminé du côté d'entrée de l'espace réactionnel à l'aide de la pression produite par la pompe sous la forme d'une solution aqueuse.

15. Procédé selon la revendication 7, **caractérisé en ce que** le mélange réactionnel obtenu après la section sous pression est retiré et évacué du système en continu ou en discontinu en partie via une garniture de dosage (10 ; 110 ; 225).

16. Procédé selon la revendication 15, **caractérisé en ce que** le mélange réactionnel obtenu après la section sous-pression (206) est acheminé dans un second espace réactionnel (219), le mélange réactionnel est à nouveau mélangé à du gaz contenant du CO₂ avant l'entrée dans le second espace réactionnel (219) et la pression est élevée au moyen du second espace réactionnel (219), si bien que l'on obtient une commutation sérielle du procédé avec des niveaux de pression réactionnelle croissants.

17. Procédé selon la revendication 16, **caractérisé en ce que** le second espace réactionnel (219) présente, de manière analogue au premier espace réactionnel (201), une section sous pression aval (220), un échangeur de chaleur (227) du côté de sortie de l'espace réactionnel (219), une garniture de maintien de pression (221), un guidage en circuit du mélange réactionnel en partie via un réservoir tampon (215) et une garniture de dosage (225) pour évacuer le mélange réactionnel.

18. Procédé selon les revendications 16 et 17, **caractérisé en ce que** le gaz contenant du CO₂ est acheminé au second espace réactionnel (219) au moyen d'une pompe centrifuge en amont du second espace réactionnel, pompe par laquelle le mélange réactionnel est guidé depuis le réservoir tampon du second espace réactionnel au moins en partie en circuit et est mélangé au gaz contenant du CO₂ avant l'entrée dans le second espace réactionnel.

19. Procédé selon les revendications 15 à 18, **caractérisé en ce que** jusqu'à 5 espaces réactionnels sont commutés en série et le mélange réactionnel est évacué via la garniture de dosage respective de l'espace réactionnel amont dans l'espace réactionnel respectivement aval, dans lequel le débit est réglé au-dessus du niveau du réservoir tampon de l'espace réactionnel aval.

20. Procédé selon les revendications 15 à 19, **caractérisé en ce que** le mélange réactionnel est évacué via la garniture de dosage du dernier espace réactionnel commuté en série, dans lequel le débit s'établit au-dessus de la valeur du pH du mélange réactionnel dans le dernier espace réactionnel commuté en série.
